# EUROPEAN PATENT APPLICATION

(11) **EP 4 796 892 A1**
(43) Date of publication of application: **26.08.2026**
(21) Application number: 26160220.5
(22) Date of filing: 23.02.2026
(51) Int. Cl.: G01B 3/1043, G01B 3/1005, G01B 3/102, B65H 75/44, F16D 57/00

(54) **TAPE MEASURE RETRACTION DECELERATOR**

(30) Priority: 24.02.2025 US 202519061821
(71) Applicant: Stanley Black & Decker MEA FZE, Dubai (AE)
(72) Inventor: WANG, Tseng Sheng, 407 Taichung City (TW); LEE, Chih-Chiang, 407 Taichung City (TW)
(74) Representative: Gill Jennings & Every LLP

(57) **Abstract**

A tape measure includes a housing assembly having a first housing annular rib, a second housing annular rib, as well as a first housing annular groove disposed between the first housing annular rib and the second housing annular rib. The tape measure includes a reel rotatably coupled to the housing wall. The reel includes a reel wall having a first reel annular rib. The first reel annular rib is disposed within the first housing annular groove. The tape measure includes a tape coupled to the reel, a first seal member, a second seal member, and a fluid. The second housing annular rib extends around the first seal member. The second seal member extends around the first seal member. The fluid is disposed at between the first seal member and the second seal member and is operable to resist rotation of the reel relative to the housing wall.

## Description

### TECHNICAL FIELD

The present disclosure relates generally to a decelerator for tape measures.

### BACKGROUND

A conventional tape measure includes a tape spooled around a reel stored within a housing assembly. The tape can extend from the housing assembly to perform various measurements and then can retract back into the housing assembly.

### SUMMARY

In various embodiments, a tape measure includes a housing assembly. The housing assembly includes a housing wall having a first housing annular rib, a second housing annular rib, and a first housing annular groove. The first housing annular rib and the second housing annular rib are centered on the axis. The first housing annular groove is disposed between the first housing annular rib and the second housing annular rib. The tape measure includes a reel. The reel is rotatably coupled to the housing wall and includes a reel wall. The reel wall includes a first reel annular rib centered on the axis. At least a portion of the first reel annular rib is disposed within the first housing annular groove. The tape measure includes a tape coupled to the reel. The tape measure includes a first seal member, a second seal member, and a fluid. The first seal member is coupled to at least one of the housing wall or the reel wall and the second housing annular rib extends around the first seal member. The second seal member is coupled to at least one of the housing wall or the reel wall and extends at least partly around the first seal member. The fluid is disposed at least partly between the first seal member and the second seal member. The fluid is operable to resist rotation of the reel relative to the housing wall and decelerate retraction of the tape.

In various embodiments, a tape measure includes a housing assembly. The housing assembly includes a housing wall having a first housing annular rib centered on an axis. The tape measure includes a reel rotatably coupled to the housing wall. The reel includes a reel wall including a first reel annular rib and a second reel annular rib. The first reel annular rib and the second reel annular rib are centered on the axis. The tape measure includes a tape coupled to the reel. The tape measure includes a first seal member and a fluid. The first seal member is coupled to at least one of the housing wall or the reel wall. The first housing annular rib, the first reel annular rib, and the second reel annular rib extend around the first seal member. The fluid is disposed radially outward from the first seal member away from the axis. The fluid is operable to resist rotation of the reel relative to the housing wall and decelerate retraction of the tape.

In various embodiments, a tape measure includes a housing assembly. The housing assembly includes a housing wall having a first housing annular rib and a second housing annular rib. The housing assembly includes a first housing annular groove disposed between the first housing annular rib and the second housing annular rib. The tape measure includes a reel rotatably coupled to the housing wall. The reel includes a reel wall having a first reel annular rib. At least a portion of the first reel annular rib is disposed within the first housing annular groove. The tape measure includes a tape coupled to the reel and a fluid. The fluid is disposed at least partly within a cavity at least partly defined by the first housing annular groove such that the fluid is disposed between the first reel annular rib and the first housing annular groove. The fluid is operable to resist rotation of the reel relative to the housing wall and decelerate retraction of the tape.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the present disclosure may be combined with one or more features of a different aspect of the present disclosure. Moreover, additional features may be recognized in certain embodiments and/or implementations that may not be present in all embodiments or implementations.

### BRIEF DESCRIPTION OF THE DRAWINGS

The disclosure will become more fully understood from the following detailed description, taken in conjunction with the accompanying Figures, in which like reference numerals refer to like elements unless otherwise indicated, in which:
Figure 1 is an example tape measure;
Figure 2 is an exploded view of the tape measure shown in Figure 1;
Figure 3 is another exploded view of the tape measure shown in Figure 1;
Figure 4 is an end view of the tape measure shown in Figure 1 with a portion of the tape measure hidden;
Figure 5 is an end view of another portion of the tape measure shown in Figure 1;
Figure 6 is a cross-sectional view of the tape measure shown in Figure 1 taken along plane A-A;
Figure 7 is a detailed view of DETAIL A in Figure 6;
Figure 8 is a side view of a portion of the tape measure shown in Figure 1;
Figure 9 is a side view of another portion of the tape measure shown in Figure 1;
Figure 10 is a perspective view of another portion of the tape measure of Figure 1;
Figure 11 is a perspective view of another portion of the tape measure of Figure 1;
Figure 12 is a perspective view of another portion of the tape measure of Figure 1; and
Figure 13 is a perspective view of another portion of the tape measure of Figure 1.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRRIPTION

Following below are more detailed descriptions of various concepts related to, and implementations of a tape measure retraction decelerator. The various concepts introduced above and discussed in greater detail below may be implemented in any of a number of ways, as the described concepts are not limited to any particular manner of implementation. Examples of specific implementations and applications are provided primarily for illustrative purposes.

A conventional tape measure includes a housing assembly to protect a tape spooled around a reel. A portion of the tape extends through an opening of the housing assembly. A length of the portion can be extended by the user. The tape includes marking associated with a length of the portion. A user can then utilize the tape to take measurements of various objects (e.g., pieces of wood, pieces of metal etc.). To do this, a user can pull on a portion of the tape extending through the opening to cause the reel to rotate and the tape to unwrap from the reel and extend through the opening. Upon taking the measurements, the user can release the tape causing the reel to rotate and the tape to retract back into the housing assembly.

The speed at which the tape retracts back into the housing assembly is directly proportional to the length of the tape extended out of the opening of the housing assembly. Therefore, a user measuring a larger object, and as a result extending a greater length of tape out of the opening of the housing assembly, can result in the tape rapidly retracting back to the housing assembly. As it retracts, the tape can collide with surrounding objects or people, potentially causing damage or harm.

Implementations described herein are related to a tape measure having a housing assembly, a reel, and a tape spooled around the reel. The housing assembly includes a housing wall, and the reel includes a reel wall. The tape measure further includes a fluid disposed between a first seal member and a second seal member located coupled to the housing wall or the reel wall. Therefore, when the tape retracts back to the housing assembly, the fluid resists the rotation of the reel within the housing assembly. As a result, the tape does not retract back to the housing assembly as fast as in conventional systems, mitigating unintentional movement of the tape during retraction.

Technically and beneficially, the tape measure of the present disclosure provides several technical advantages and benefits including slowing the reattraction of the tape back to the housing assembly to prevent unintentional movement of the tape during retraction. This controlled retraction helps prevent potential damage to nearby objects or injury to individuals in the vicinity of the tape measure. By minimizing rapid deceleration, the design ensures safer operation of the tape measure in various environments.

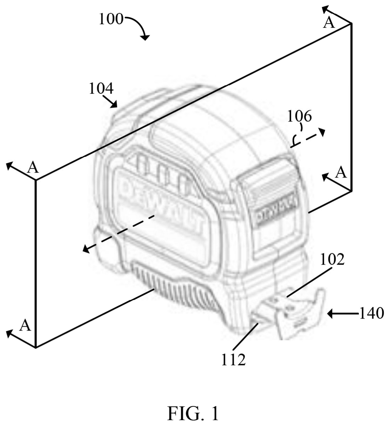

Figure 1 depicts a tape measure 100 (e.g., a retractable tape measure, etc.). The tape measure 100 may be utilized to take measurements of various objects (e.g., a room, construction material, etc.) or distances (e.g., distance between a first edge and a second edge, etc.). To take the measurements, the tape measure 100 includes a tape 102. The tape 102 includes a series of markers indicating various lengths (e.g., inches, feet, meters, centimeters, etc.) and is configured to extend outward from a remaining portion of the tape measure 100, as described in more detail herein. The tape 102 may be made from metal (e.g., aluminum, etc.).

The tape measure 100 is utilized by a user (e.g., human, operator, craftsperson, etc.) to perform various tasks. The user may grasp an end of the tape 102 and draw the tape 102 outward from the tape measure 100 to measure a length. For example, the tape measure 100 may be utilized by a user to measure a length of construction material (e.g., wood beams, metal pipes, etc.).

The tape measure 100 includes a housing assembly 104 (e.g., housing shell, etc.). The housing assembly 104 provides protection, such as to moisture and dirt, to components stored within the housing assembly 104. In this way, the housing assembly 104 facilitates prolonged desirable operations of the components disposed therein, such as the tape 102. The housing assembly 104 may be formed from (e.g., molded from, etc.) plastic, for example.

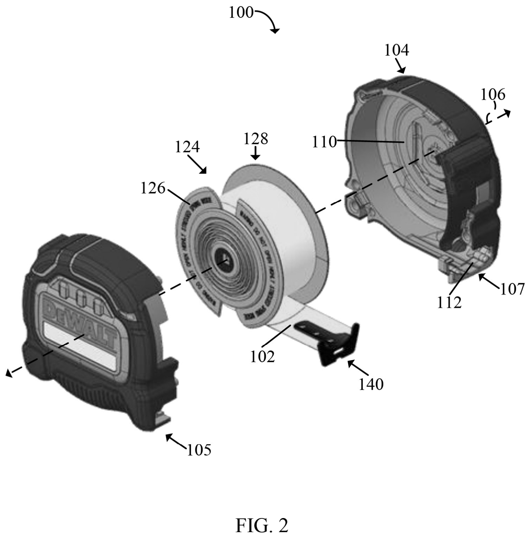

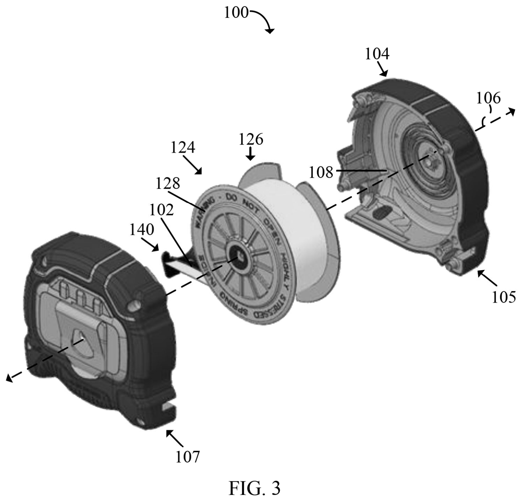

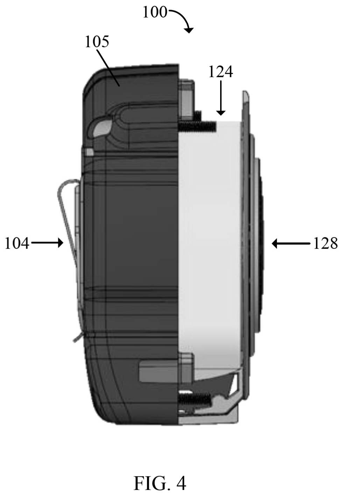

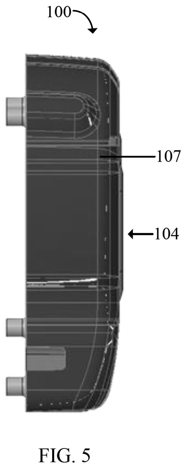

As shown in Figures 2-5, the housing assembly 104 includes a first housing portion 105 and a second housing portion 107. The first housing portion 105 is configured to snap (e.g. clip, etc.) into the second housing portion 107 to form the housing assembly 104. In other embodiments, the first housing portion 105 is fastened to the second housing portion 107 with a plurality of fasteners.

The housing assembly 104 includes a first housing wall 108 (e.g., shell, casing, etc.) and a second housing wall 110 (e.g., shell, casing, etc.). Specifically, the first housing portion 105 includes the first housing wall 108 and the second housing portion 107 includes the second housing wall 110. The first housing wall 108 is opposite the second housing wall 110.

The tape measure 100 also includes a reel 124. For example, the reel 124 is disposed within the housing assembly 104. The reel 124 is rotatably coupled to at least one of the first housing wall 108 or the second housing wall 110 (e.g., such that the reel 124 can rotate within the housing assembly 104, etc.). The reel 124 may extend from a center of the first housing wall 108 to a center of the second housing wall 110. The reel 124 is centered on a reel axis 106. The reel axis 106 may extend through at least one of a center of the first housing wall 108 or a center of the second housing wall 110. In other words, the housing assembly 104, the reel 124, the first housing wall 108, and the second housing wall 110 may all be centered on the reel axis 106. The reel 124 is described in further detail below.

The housing assembly 104 includes a housing opening 112 (e.g., aperture). The housing opening 112 extends between adjacent portions of the first housing portion 105 and the second housing portion 107. The housing opening 112 be centered on an axis that is substantially perpendicular to the reel axis 106. As described herein, the term "substantially perpendicular" means that the reel axis 106 and the axis that the housing opening 112 is centered on extend at an angle of +80 degrees to +100 degrees with respect to the plane along which the reel axis 106 traverses. The same definition (+80 degrees to +100 degrees with respect to the plane along which the reel axis 106 traverses) similarly applies to other recitations of "substantially perpendicular" herein.

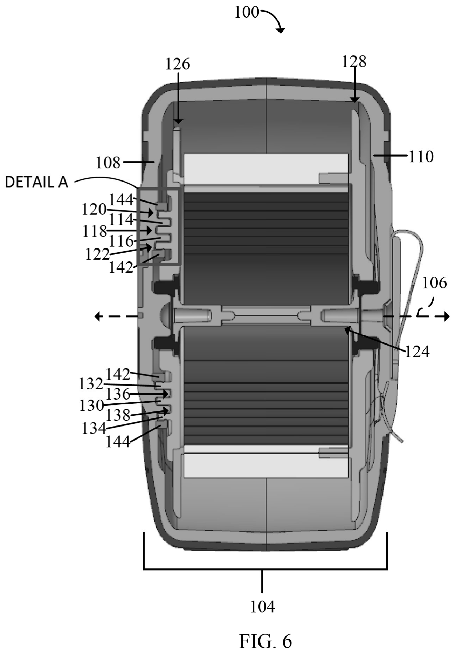

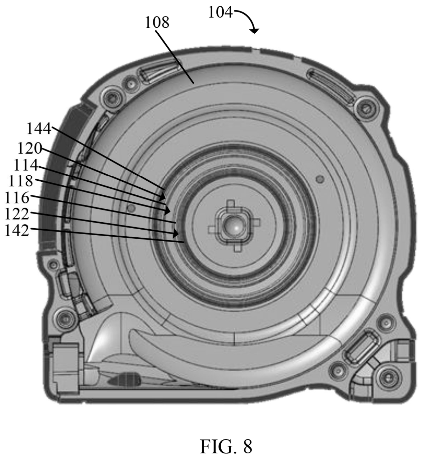

As shown in Figures 6-8, the first housing wall 108 includes a first housing annular rib 114 (e.g., projection, flange, etc.) and a second housing annular rib 116 (e.g., projection, flange, etc.). For example, the first housing annular rib 114 and the second housing annular rib 116 extend from the first housing wall 108. The first housing annular rib 114 and the second housing annular rib 116 may be circular in shape. The first housing annular rib 114 and the second housing annular rib 116 may be centered on the reel axis 106. In other words, the reel axis 106 may extend through a center of the housing assembly 104, a center of the reel 124, a center of the first housing annular rib 114, and a center of the second housing annular rib 116.

As described in further detail below, the reel 124 is configured to rotate about the first housing annular rib 114 and the second housing annular rib 116. For example, as the reel 124 rotates within the housing assembly 104 about the reel axis 106, a portion of the reel 124 (e.g., a first reel annular groove 136, a second reel annular groove 138, etc.) may rotate about the first housing annular rib 114 and the second housing annular rib 116. This interaction of the reel 124 and the first housing annular rib 114 and the second housing annular rib 116 adds resistance to the rotation of the reel 124 and the tape 102, effectively slowing down the retraction of the tape 102 around the reel 124.

The second housing annular rib 116 is located radially inward from the first housing annular rib 114. Thus, the second housing annular rib 116 may be closer to the reel axis 106 than the first housing annular rib 114. The first housing annular rib 114 and the second housing annular rib 116 extend outward from the first housing wall 108. In some embodiments, at least one of the first housing annular rib 114 or the second housing annular rib 116 extend substantially parallel to the reel axis 106 toward the second housing wall 110. As described herein, the term "substantially parallel" means that the first housing annular rib 114 or the second housing annular rib 116 extends at an angle of -10 degrees to +10 degrees with respect to the reel axis 106. The same definition (-10 degrees to +10 degrees with respect to the reel axis 106) similarly applies to other recitations of "substantially parallel" herein.

The first housing wall 108 includes a first housing annular groove 118, a second housing annular groove 120, and a third housing annular groove 122. The first housing annular groove 118, the second housing annular groove 120, and the third housing annular groove 122 are all be disposed along the first housing wall 108. The first housing annular groove 118, the second housing annular groove 120, and the third housing annular groove 122 may be circular in shape. The first housing annular groove 118, the second housing annular groove 120, and the third housing annular groove 122 may be centered on the reel axis 106. In other words, the reel axis 106 may extend through the center of the housing assembly 104, a center of the first housing annular groove 118, a center of the second housing annular groove 120, and a center of the third housing annular groove 122.

As described in further detail below, the reel 124 is configured to rotate about the first housing annular groove 118, the second housing annular groove 120, and the third housing annular groove 122. For example, as the reel 124 rotates within the housing assembly 104 about the reel axis 106, a portion of the reel 124 (e.g., a first reel annular rib 130, a second reel annular rib 132, a third reel annular rib 134, etc.) may rotate about the first housing annular groove 118, the second housing annular groove 120, and the third housing annular groove 122. This interaction of the reel 124 and the first housing annular groove 118, the second housing annular groove 120, and the third housing annular groove 122 adds resistance to the rotation of the reel 124 and the tape 102, effectively slowing down the retraction of the tape 102 around the reel 124.

The first housing annular groove 118 is defined by the first housing annular rib 114 and the second housing annular rib 116. In other words, the first housing annular groove 118 is disposed between the first housing annular rib 114 and the second housing annular rib 116. The second housing annular groove 120 is defined by the first housing annular rib 114 and is located radially outward from the first housing annular rib 114. The third housing annular groove 122 is defined by the second housing annular rib 116 and located radially inward from the second housing annular rib 116.

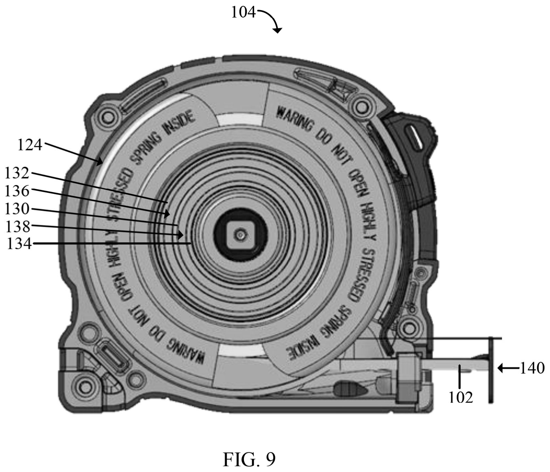

As shown in Figure 9, the reel 124 is shown in more detail. For example, the reel 124 is disposed within the housing assembly 104. The reel 124 is rotatably coupled to at least one of the first housing wall 108 or the second housing wall 110 (e.g., such that the reel 124 can rotate within the housing assembly 104, etc.). In various embodiments, the reel 124 is rotatably coupled to both the first housing wall 108 and the second housing wall 110. The reel 124 is selectively coupled to at least one of the first housing wall 108 or the second housing wall 110 such that the reel 124 can be removed from the housing assembly 104. The reel 124 is configured to rotate around the reel axis 106.

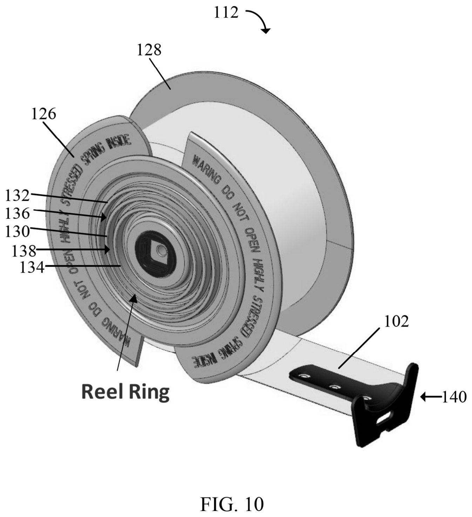

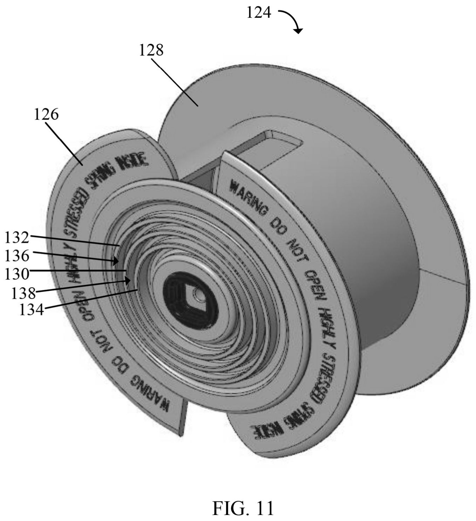

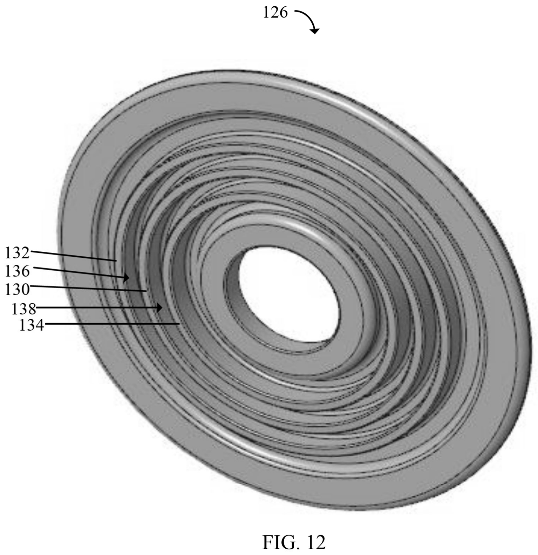

As shown in Figures 10-12, the reel 124 includes a first reel wall 126 and a second reel wall 128. The first reel wall 126 and the second reel wall 128 are centered on the reel axis 106 when the reel 124 is coupled to at least one of the first housing wall 108 or the second housing wall 110. The first reel wall 126 and the second reel wall 128 extend radially outward from the reel 124. The first reel wall 126 and the second reel wall 128 rotate around the reel axis 106 when the reel 124 rotates.

The first reel wall 126 includes the first reel annular rib 130, the second reel annular rib 132, and the third reel annular rib 134. The first reel annular rib 130, the second reel annular rib 132, and the third reel annular rib 134 may be circular in shape. The first reel annular rib 130, the second reel annular rib 132, and the third reel annular rib 134 may be centered on the reel axis 106. In other words, the reel axis 106 may extend through the center of the housing assembly 104, a center of the first reel annular rib 130, a center of the second reel annular rib 132, and a center of the third reel annular rib 134. The first reel annular rib 130, the second reel annular rib 132, and the third reel annular rib 134 extend from the first reel wall 126. For example, when the reel 124 is disposed within the housing assembly 104, the first reel annular rib 130 can extend from the first reel wall 126 along the reel axis 106 toward the first housing wall 108.

In various embodiments, as described herein, the third reel annular rib 134 is located radially inward from the first reel annular rib 130 and the second reel annular rib 132. For example, the third reel annular rib 134 is located closer to the reel axis 106 than the first reel annular rib 130 and the second reel annular rib 132. The first reel annular rib 130 is located radially inward from the second reel annular rib 132 and is located radially outward from the third reel annular rib 134. In other words, the first reel annular rib 130 is disposed between the second reel annular rib 132 and the third reel annular rib 134. The second reel annular rib 132 is located radially outward from the first reel annular rib 130 and the third reel annular rib 134.

In various embodiments, as described herein, when the reel 124 is coupled to the first housing wall 108, at least a portion of the first reel annular rib 130 is disposed within the first housing annular groove 118. In other words, at least a portion of the first reel annular rib 130 is disposed between the first housing annular rib 114 and the second housing annular rib 116. At least a portion of the second reel annular rib 132 is disposed within the second housing annular groove 120. In other words, the second reel annular rib 132 is adjacent to the first housing annular rib 114. At least a portion of the third reel annular rib 134 is disposed within the third housing annular groove 122. In other words, the third reel annular rib 134 is adjacent to the second housing annular rib 116. A portion of the first reel annular rib 130, the second reel annular rib 132, and the third reel annular rib 134 being disposed within the first housing annular groove 118, the second housing annular groove 120, and the third housing annular groove 122 adds resistance to the reel 124 and tape 102, effectively slowing down the retraction of the tape 102 around the reel 124.

The first reel wall 126 includes the first reel annular groove 136 and the second reel annular groove 138. The first reel annular groove 136 and the second reel annular groove 138 may be circular in shape. The first reel annular groove 136 and the second reel annular groove 138 may be centered on the reel axis 106. In other words, the reel axis 106 may extend through the center of the housing assembly 104, a center of the first reel annular groove 136 and a center of the second reel annular groove 138. The first reel annular groove 136 is defined by the first reel annular rib 130 and the second reel annular rib 132. For example, the first reel annular groove 136 is disposed between the first reel annular rib 130 and the second reel annular rib 132. The second reel annular groove 138 is defined by the first reel annular rib 130 and the third reel annular rib 134. For example, the second reel annular groove 138 is disposed between the first reel annular rib 130 and the third reel annular rib 134. The second reel annular groove 138 is located radially inward from the first reel annular groove 136.

When the reel 124 is coupled to the first housing wall 108 at least a portion of the first housing annular rib 114 is disposed within the first reel annular groove 136. In other words, the first housing annular rib 114 is disposed between the first reel annular rib 130 and the second reel annular rib 132. In addition, at least a portion of the second housing annular rib 116 is disposed within the second reel annular groove 138. In other words, the second housing annular rib 116 is disposed between the first reel annular rib 130 and the third reel annular rib 134.

As the reel 124 rotates within the housing assembly 104 around the reel axis 106, the first reel wall 126 and the second reel wall 128 rotate. As a result, the first reel annular groove 136 and the second reel annular groove 138 rotate around the reel axis 106. Specifically, the first reel annular groove 136 rotates around the first housing annular rib 114 and the second reel annular groove rotates around the second housing annular rib 116. The rotation of the first reel wall 126 and the second reel wall 128 further causes the first reel annular rib 130, the second reel annular rib 132, and the third reel annular rib 134 to rotate around the reel axis 106. Specifically, the first reel annular rib 130, the second reel annular rib 132, and the third reel annular rib 134 rotate within the first housing annular groove 118, the second housing annular groove 120, and the third housing annular groove 122, respectively. The interactions between the reel 124 and the various components of the first housing wall 108 (e.g., the first housing annular rib 114, the second housing annular rib 116, the first housing annular groove 118, etc.) adds resistance to the rotation of the reel 124 and the tape 102, effectively slowing down the retraction of the tape 102 around the reel 124.

As shown in Figure 9, the tape measure 100 includes the tape 102. The tape 102 is coupled to the reel 124 and is centered on the reel axis 106. At least a portion of the tape 102 is selectively spooled around the reel 124. For example, the tape 102 can be spool around the reel 124 such that an end 140 of the tape 102 rests on the outside of the tape 102 as it is spooled around the reel 124. A user can then pull on the end 140 of the tape 102 to selectively unwrap a length of the tape 102 from the reel 124. As the tape 102 is unspooled from the tape 102, the tape 102 rotates the reel 124 within the housing assembly 104.

At least a portion of the tape 102 extends out of the housing assembly 104. For example, when the tape 102 and the reel 124 are disposed within the housing assembly 104, the end 140 of the tape 102 can extend out of the housing opening 112. A user can pull on the end 140 to unwrap at least a portion of the tape 102 from the reel 124 and increase a length of the tape 102 extending out of the housing opening 112.

In various embodiments, as described herein, the tape 102 can be automatically retracted by the tape measure 100. For example, when a user releases the end 140 of the tape 102, the length of the tape 102 extending out of the housing opening 112 can begin to automatically rewrap around the reel 124 due to rotation of the reel 124. As a result, the end 140 can move toward the housing opening 112 decreasing the length of the tape 102 extending out of the housing opening 112.

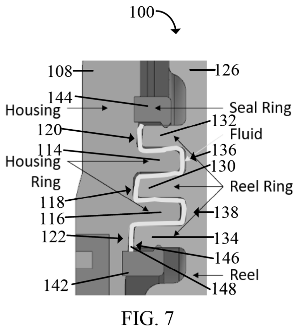

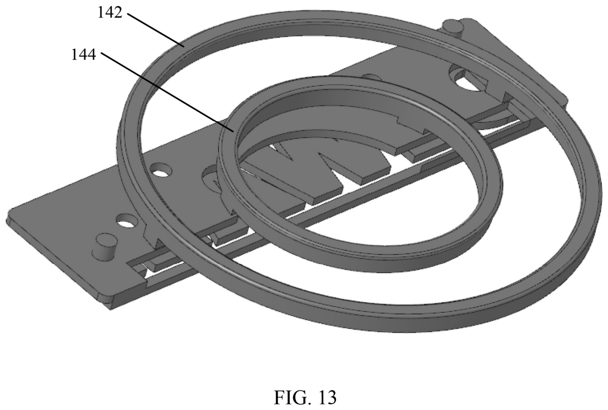

As shown in Figure 13, the tape measure 100 includes a first seal member 142 and a second seal member 144. In various embodiments, at least one of the first seal member 142 or the second seal member 144 is a cylindrical ring (e.g., an O-ring, a U-ring, etc.). The first seal member 142 and the second seal member 144 may be composed of a durable elastic material such as rubber, silicone, or thermoplastic elastomers. The first seal member 142 and the second seal member 144 are coupled to at least one of the first housing wall 108, the second housing wall 110, the first reel wall 126, or the second reel wall 128. As shown in Figure 7, the first seal member 142 and the second seal member 144 are coupled to the first housing wall 108 and the first reel wall 126. Additionally Figure 7 shows the first housing annular rib 114, the second housing annular rib 116, the first housing annular groove 118, the second housing annular groove 120, the third housing annular groove 122, the first reel annular rib 130, the second reel annular rib 132, the third reel annular rib 134, the first reel annular groove 136, and the second reel annular groove 138 disposed between the first seal member 142 and the second seal member 144.

The first seal member 142 and the second seal member 144 are centered on the reel axis 106. The first seal member 142 and the second seal member 144 extend from at least one of the first housing wall 108, the second housing wall 110, the first reel wall 126, or the second reel wall 128. For example, when the first seal member 142 is coupled to the first housing wall 108, the first seal member 142 extends outward from the first housing wall 108. In some embodiments, the first seal member 142 extends substantially parallel to the reel axis 106 toward the first reel wall 126. In another example, when the second seal member 144 is coupled to the first reel wall 126, the second seal member 144 extends from the first reel wall 126. In some embodiments, the second seal member 144 extends substantially parallel to the reel axis 106 toward the first housing wall 108. As shown in Figure 7, the first seal member 142 and the second seal member 144 are both coupled to the first housing wall 108 and extend outward from the first housing wall 108 toward the first reel wall 126.

The first seal member 142 is adjacent to the third reel annular rib 134. For example, when the first seal member 142 is coupled to the first housing wall 108 or the second housing wall 110, the first seal member 142 can come into contact with the third reel annular rib 134 to form a seal. When the first seal member 142 is coupled to the first reel wall 126 or the second reel wall 128, the first seal member 142 can come into contact with the first housing wall 108 or the second housing wall 110 to form the seal. The third reel annular rib 134, the second reel annular rib 132, the first reel annular rib 130, the second housing annular rib 116, and the first housing annular rib 114 extend at least partly around the first seal member 142.

The second seal member 144 is adjacent to the second reel annular rib 132. For example, when the second seal member 144 is coupled to the first housing wall 108 or the second housing wall 110, the second seal member 144 can come into contact with the second reel annular rib 132 to form a seal. When the second seal member 144 is coupled to the first reel wall 126 or the second reel wall 128, the second seal member 144 can come into contact with the first housing wall 108 or the second housing wall 110 to form a seal. The second seal member 144 can extend at least partly around the third reel annular rib 134, the second reel annular rib 132, the first reel annular rib 130, the second housing annular rib 116, the first housing annular rib 114, and the first seal member 142.

The tape measure 100 includes a cavity 146. The cavity 146 is defined by the first housing wall 108 and the first reel wall 126 or the second housing wall 110 and the second reel wall 128. For example, the cavity 146 is defined by the area of the first housing wall 108 and the first reel wall 126 and is disposed between the first seal member 142 and the second seal member 144. In another example, the cavity 146 is defined by the area disposed between the first housing annular groove 118, the second housing annular groove 120, the third housing annular groove 122, the first reel annular groove 136, and the second reel annular groove 138.

The tape measure 100 includes a fluid 148. The fluid 148 can be gaseous (e.g., air, etc.). Additionally, the fluid 148 can be non-gaseous (e.g., aqueous, liquid, etc.). For example, the fluid 148 can include a grease (e.g., synthetic grease, silicone grease, etc. ), an oil, or another lubricant. The fluid 148 is disposed at least partly between the first seal member 142 and the second seal member 144. For example, the seals formed by the first seal member 142 and the second seal member 144 can keep the fluid 148 disposed therein. The fluid 148 is disposed at least partly within the cavity 146.

The fluid 148 is operable to resist rotation of the reel 124 relative to the first housing wall 108 or the second housing wall 110. For example, as the reel 124 rotates within the housing assembly 104, the first reel wall 126 and the second reel wall 128 rotates, causing the first reel annular groove 136, the second reel annular groove 138, the first reel annular rib 130, the second reel annular rib 132, and the third reel annular rib 134 to rotate against the fluid 148. The resistance applied by the fluid 148 varies based upon the length of the tape 102 spooled around the reel 124. For example, as the tape 102 is retracted into the housing assembly 104, the length of the tape 102 spooled around the reel 124 increases such that the amount of resistance applied by the fluid 148 to the reel 124 also increases.

A user may utilize the tape measure 100 by pulling on the end 140 of the tape 102. As the end 140 of the tape 102 is pulled, the reel 124 rotates causing the tape 102 to unspool from the reel 124, thereby increasing the length of the tape 102 extending out of the housing opening 112. As the reel 124 rotates, the first reel annular rib 130, the second reel annular rib 132, and the third reel annular rib 134 rotate within the first housing annular groove 118, the second housing annular groove 120, and the third housing annular groove 122. Also, as the reel 124 rotates the first reel annular groove 136 and the second reel annular groove 138 rotate about the first housing annular rib 114 and the second housing annular rib 116. As a result, the first reel annular rib 130, the second reel annular rib 132, the third reel annular rib 134, the first reel annular groove 136, and the second reel annular groove 138 rotate against the fluid 148, causing the fluid 148 to resist the rotation of the reel 124.

As the user releases the end 140 of the tape 102, the reel 124 rotates, causing the tape 102 to spool around the reel 124, thereby decreasing the length of the tape 102 extending out of the housing opening 112. As the reel 124 rotates, the first reel annular rib 130, the second reel annular rib 132, and the third reel annular rib 134 rotate within the first housing annular groove 118, the second housing annular groove 120, and the third housing annular groove 122. Also, as the reel 124 rotates the first reel annular groove 136 and the second reel annular groove 138 rotate about the first housing annular rib 114 and the second housing annular rib 116. As a result, the first reel annular rib 130, the second reel annular rib 132, the third reel annular rib 134, the first reel annular groove 136, and the second reel annular groove 138 rotate against the fluid 148, causing the fluid 148 to resist the rotation of the reel 124. As such, the resistance applied by the fluid 148 decelerates the tape 102 as it is retracted through the housing opening 112.

In various embodiments, as described herein, the second housing wall 110 is identical to the first housing wall 108. For example, both the first housing wall 108 and the second housing wall 110 can include the first housing annular rib 114, the second housing annular rib 116, the first housing annular groove 118, the second housing annular groove 120, and the third housing annular groove 122. In various embodiments, as described herein, the second reel wall 128 is identical to the first reel wall 126. For example, both the first reel wall 126 and the second reel wall 128 can include the first reel annular rib 130, the second reel annular rib 132, the third reel annular rib, the first reel annular groove 136, and the second reel annular groove 138.

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable sub combination. Moreover, although features may be described as acting in certain combinations and even initially claimed as such, one or more features from a claimed combination can, in some cases, be excised from the combination, and the claimed combination may be directed to a sub combination or variation of a sub combination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be in the scope of the appended claims.

The term "coupled" and the like, as used herein, mean the joining of two components directly or indirectly to one another. Such joining may be stationary (e.g., permanent) or moveable (e.g., removable or releasable). Such joining may be achieved with the two components, or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. All changes and modifications that come in the spirit and/or scope of the described implementations are desired to be protected. It should be understood that some features may not be necessary, and implementations lacking the various features may be contemplated as in the scope of the disclosure, the scope being defined by the claims that follow. When the language "a portion" is used, the item can include a portion and/or the entire item unless specifically stated to the contrary.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W1 to W2, etc.) herein are inclusive of their maximum values and minimum values (e.g., W1 to W2 includes W1 and includes W2, etc.), unless otherwise indicated. Furthermore, a range of values (e.g., W1 to W2, etc.) does not necessarily require the inclusion of intermediate values in the range of values (e.g., W1 to W2 can include only W1 and W2, etc.), unless otherwise indicated.

## Claims

1. A tape measure comprising:
a housing assembly including a housing wall comprising:
a first housing annular rib, the first housing annular rib centered on an axis,
a second housing annular rib, the second housing annular rib centered on the axis, and
a first housing annular groove disposed between the first housing annular rib and the second housing annular rib;
a reel rotatably coupled to the housing wall, the reel comprising a reel wall having a first reel annular rib centered on the axis, at least a portion of the first reel annular rib disposed within the first housing annular groove;
a tape coupled to the reel;
a first seal member coupled to at least one of the housing wall or the reel wall, the second housing annular rib extending around the first seal member;
a second seal member coupled to at least one of the housing wall or the reel wall, the second seal member extending at least partly around the first seal member; and
a fluid disposed at least partly between the first seal member and the second seal member, the fluid operable to resist rotation of the reel relative to the housing wall and decelerate retraction of the tape.

2. The tape measure of claim 1, wherein the fluid is disposed at least partly within a cavity at least partly defined by the first housing annular groove.

3. The tape measure of claim 1 or 2, wherein the fluid comprises a grease.

4. The tape measure of any of the preceding claims, wherein at least a portion of the tape is spooled around the reel, wherein preferably the resistance varies based upon a length of the tape spooled around the reel.

5. The tape measure of any of the preceding claims, wherein:
the housing wall further comprises a second housing annular groove disposed between the first housing annular rib and the second seal member; and
the reel wall comprises a second reel annular rib centered on the axis, at least a portion of the second reel annular rib disposed within the second housing annular groove.

6. The tape measure of any of the preceding claims, wherein:
the housing assembly further comprises a third housing annular groove disposed between the second housing annular rib and the first seal member; and
the reel wall comprises a third reel annular rib centered on the axis, at least a portion of the third reel annular rib disposed within the third housing annular groove.

7. A tape measure comprising:
a housing assembly comprising a housing wall having a first housing annular rib centered on an axis;
a reel rotatably coupled to the housing wall, the reel comprising a reel wall comprising a first reel annular rib and a second reel annular rib, the first reel annular rib centered on the axis, the second reel annular rib centered on the axis;
a tape coupled to the reel;
a first seal member coupled to at least one of the housing wall or the reel wall, the first housing annular rib, the first reel annular rib, and the second reel annular rib extending around the first seal member; and
a fluid disposed radially outward from the first seal member away the axis, the fluid operable to resist rotation of the reel relative to the housing wall and decelerate retraction of the tape.

8. The tape measure of claim 7, wherein the tape measure further comprises a second seal member coupled to at least one of the housing wall or the reel wall, the second seal member extending at least partly around the first seal member, the fluid disposed radially inward from the second seal member toward the axis.

9. The tape measure of claim 7 or 8, wherein the fluid comprises a grease.

10. The tape measure of any of claims 7 to 9, wherein at least a portion of the tape is spooled around the reel, wherein preferably the resistance varies based upon a length of the tape spooled around the reel.

11. The tape measure of any of claims 7 to 10, wherein the reel wall further comprises a first reel annular groove disposed between the first reel annular rib and the second reel annular rib, at least a portion of the first housing annular rib disposed within the first reel annular groove, wherein preferably the fluid is disposed at least partly within a cavity at least partly defined by the first reel annular groove.

12. A tape measure comprising:
a housing assembly including a housing wall comprising:
a first housing annular rib,
a second housing annular rib, and
a first housing annular groove disposed between the first housing annular rib and the second housing annular rib;
a reel rotatably coupled to the housing wall, the reel comprising a reel wall having a first reel annular rib, at least a portion of the first reel annular rib disposed within the first housing annular groove;
a tape coupled to the reel; and
a fluid disposed at least partly within a cavity at least partly defined by the first housing annular groove such that the fluid is disposed between the first reel annular rib and the first housing annular groove, the fluid operable to resist rotation of the reel relative to the housing wall and decelerate retraction of the tape.

13. The tape measure of claim 12, wherein the tape measure further comprises a seal member coupled to at least one of the housing wall or the reel, the seal member extending at least partly around the first housing annular rib, the second housing annular rib, and the first reel annular rib, the fluid disposed radially inward from the seal member.

14. The tape measure of claim 12 or 13, wherein the fluid comprises a grease.

15. The tape measure of any of claims 12 to 14, wherein at least a portion of the tape is spooled around the reel, wherein the resistance varies based upon a length of the tape spooled around the reel.

16. The tape measure of any of claims 12 to 15, wherein the reel wall further comprises a second reel annular rib, a first reel annular groove disposed between the first reel annular rib and the second reel annular rib, at least a portion of the second housing annular rib disposed within the first reel annular groove, the cavity at least partly defined by the first reel annular groove.
